# EUROPEAN PATENT APPLICATION

(11) **EP 4 753 058 A1**
(43) Date of publication of application: **03.06.2026**
(21) Application number: 25213203.0
(22) Date of filing: 04.11.2025
(51) Int. Cl.: H01M 50/474, H01M 10/04, H01M 50/103, H01M 50/121

(54) **ELECTRICITY STORAGE DEVICE**

(30) Priority: 14.11.2024 JP 2024198888
(71) Applicant: Prime Planet Energy & Solutions, Inc., Tokyo 103-0022 (JP)
(72) Inventor: ISHIDA, Riku, Tokyo, 103-0022 (JP)
(74) Representative: Kuhnen & Wacker Patent- und Rechtsanwaltsbüro PartG mbB

(57) **Abstract**

Provided is a technique for suppressing a surface pressure of an electrode assembly from becoming non-uniform. A herein disclosed electricity storage device includes an electrode assembly, a case, and a spacer. An outer surface of the electrode assembly includes a first surface on one of end parts in a laminate direction, a second surface on the other end part in the direction, and a third surface between the first surface and the second surface. The first surface, the second surface, and the third surface are configured by the separator. A first end part in a longitudinal direction of the separator is arranged on the third surface. The separator includes a first area containing the first end part and arranged on the third surface. The first area is configured to cover a part of the spacer, and a joint part where the first area is joined to the spacer.

## Description

### BACKGROUND OF THE DISCLOSURE

### 1. Technical Field

A present disclosure relates to an electricity storage device.

### 2. Background

As an example of an electricity storage device, it is possible to use a secondary battery, such as lithium ion secondary battery. Recently, this type of electricity storage device is, for example, suitably used in a power supply for driving automobiles, such as battery electric vehicle (BEV), hybrid electric vehicle (HEV), and plug-in hybrid electric vehicle (PHEV), or the like.

A secondary battery disclosed by Japanese Patent Publication No. 7448357 includes flat-shaped positive electrodes, flat-shaped negative electrodes, a strip-shaped separator provided between the positive electrodes and the negative electrodes, an outer member configured to accommodate the laminated positive electrodes, negative electrodes, and separator, and an adhesive tape configured to fix a start terminal or end terminal of the strip of the separator. The positive electrodes and the negative electrodes are alternately laminated in a state where the separator is disposed between them. The separator is formed in a zigzag shape so as to be disposed between the positive electrodes and the negative electrodes. A fold portion of the zigzag shape of the separator is provided so as to make an end part of the negative electrode be far away from the fold portion only by at least a previously determined length. The separator is configured to cover at least a part of an upper surface of an electrode positioned on the uppermost layer in a laminate direction or at least a part of a lower surface of an electrode positioned on the lowermost layer in the laminate direction among the laminated positive electrodes and negative electrodes, by a portion at a start terminal side or a portion at an end terminal side of the strip of the separator. A whole of the separator covering the electrode positioned at the outermost layer in the laminate direction is covered by the adhesive tape. The separator covering the electrode positioned at the outermost layer in the laminate direction is a portion at the start terminal side or a portion at the end terminal side of the strip of the separator.

The same publication describes that, in accordance with such a configuration, it is possible to suppress a bad effect caused by the fold portion of the separator formed in the zigzag shape.

### SUMMARY

As described in the above prior art document, regarding a conventional electrode assembly, the whole of the separator covering the electrode positioned at the outermost layer in the laminate direction of the positive electrodes and negative electrodes is covered by the adhesive tape. If the adhesive tape is arranged at the end part in the laminate direction of the positive electrodes and negative electrodes, a risk causing a non-uniformity of a surface pressure at a restriction time is increased in the electrode assembly, for example, by a step due to the adhesive tape. If the non-uniformity of the surface pressure is caused, for example, a Li precipitation, or the like, might be caused, and thus it is not preferable.

Then, the present inventor thinks to suppress the surface pressure of the electrode assembly from becoming non-uniform.

According to a herein disclosed technique, an electricity storage device can be provided. This electricity storage device includes an electrode assembly in which positive electrodes and negative electrodes are alternately laminated while a separator is disposed between them, includes a case which is configured to accommodate the electrode assembly, and includes a spacer which is arranged between the case and the electrode assembly. An outer surface of the electrode assembly includes a first surface that is positioned on one of end parts in a laminate direction of the positive electrodes and the negative electrodes, includes a second surface that is positioned on the other one of the end parts in the laminate direction, and includes a third surface that is positioned between the first surface and the second surface. The first surface, the second surface, and the third surface are configured by the separator. A first end part in a longitudinal direction of the separator is arranged on the third surface. The separator includes a first area that contains the first end part and that is arranged on the third surface. The first area is configured to cover a part of the spacer, and includes a joint part which is joined to the spacer.

In accordance with such a configuration, it is possible to suppress the surface pressure of the electrode assembly from becoming the non-uniform.

### BRIEF DESCRIPTION OF THE DRAWINGS

FIG. 1 is a perspective view of an electricity storage device 1.
FIG. 2 is a perspective view of the electricity storage device 1.
FIG. 3 is an III-III cross section view of FIG. 1.
FIG. 4 is a schematic cross section view of an electrode assembly 30.
FIG. 5 is a perspective view of a spacer 40.
FIG. 6 is a cross section view of a joint part W.
FIG. 7 is a perspective view of an electrode assembly 230.

### DESCRIPTION OF THE EMBODIMENTS

Below, one embodiment of a herein disclosed electricity storage device will be explained. The embodiment explained herein is not intended to particularly restrict the herein disclosed technique. The herein disclosed technique is not restricted to the embodiment explained herein, unless specifically mentioned. Drawings are schematically illustrated, and thus are not to always reflect actual things. The members/parts providing the same effect are suitably provided with the same numerals and signs, and overlapping explanations might be omitted. In drawings, reference signs "X", "Y", and "Z" respectively represent "first direction", "second direction", and "third direction" of the present description. In drawings, reference signs "X1", "X2", "Y1", "Y2", "Z1", and "Z2" represent directions of the drawings. However, these directions are defined for convenience sake of explanation, and are not intended to restrict a disposed aspect of the electricity storage device at all. A wording "A to B" representing a numerical range not only means "equal to or more than A and not more than B" unless specifically mentioned, but also semantically covers a meaning of "more than A and less than B".

In the present description, a term "electricity storage device" represents a device in which an electrical charge and an electrical discharge are generated in response to movement of an electric charge carrier between a pair of electrodes (a positive electrode and a negative electrode) through an electrolyte. The electricity storage device semantically covers a secondary battery, such as lithium ion secondary battery, nickel hydrogen battery, and nickel cadmium battery; and a capacitor, such as lithium ion capacitor and electric double layer capacitor. The electricity storage device might be, for example, a lithium ion secondary battery.

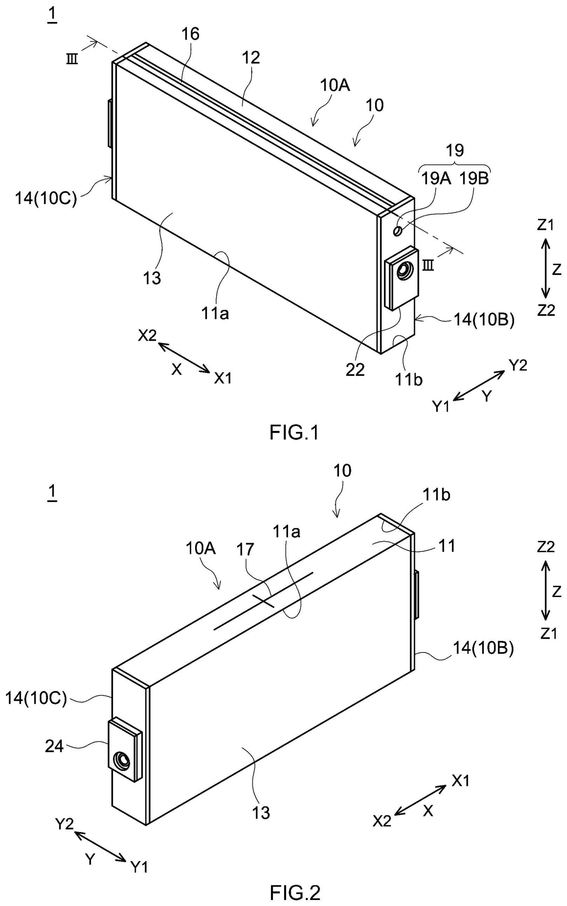

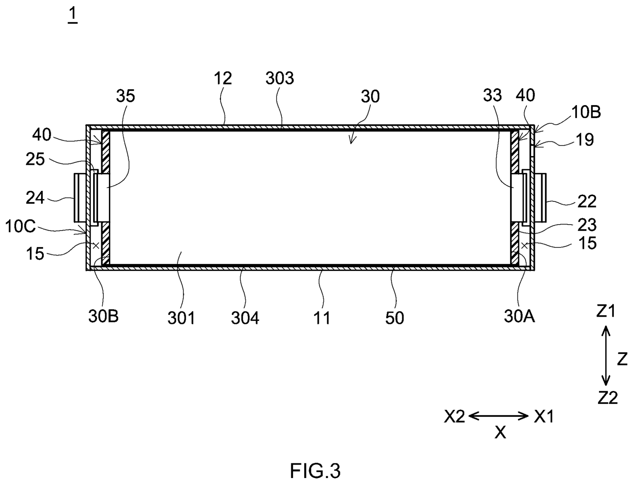

FIG. 1 and FIG. 2 are perspective views of an electricity storage device 1. FIG. 1 shows the electricity storage device 1 in a situation where a Z1 side is defined as an upper side of the drawing. In FIG. 1, an upper surface 12 of the electricity storage device 1 is arranged at the upper side in the drawing. FIG. 2 shows the electricity storage device 1 in a situation where a Z2 side is defined as an upper side of the drawing. In FIG. 2, a bottom surface 11 of the electricity storage device 1 is arranged at the upper side in the drawing. FIG. 3 is an III-III cross section view of FIG. 1. FIG. 3 shows a cross section structure of the electricity storage device 1 in a situation where one of first side surfaces 13 (here, the first side surface 13 at an Y1 side) is arranged on a front.

As shown in FIG. 1 to FIG. 3, the electricity storage device 1 includes a case 10, a positive electrode terminal 22, a negative electrode terminal 24, an electrode assembly 30, a spacer 40, a resin film 50, and an electrolytic solution (not shown in drawings). The electricity storage device 1 herein is a lithium ion secondary battery.

As shown in FIG. 1 to FIG. 3, the case 10 includes a bottom surface 11, an upper surface 12, a pair of first side surfaces 13 opposed to each other, and a pair of second side surfaces 14 opposed to each other. The case 10 herein is formed in a hexahedronal shape. In this embodiment, the bottom surface 11 and the upper surface 12 are formed to be rectangular and are opposed to each other. In embodiments shown by FIG. 1 and FIG. 2, the pair of opposed first side surfaces 13 are configured to extend from a pair of opposed long sides 11a of the bottom surface 11, and to have relatively larger area sizes. The pair of opposed second side surfaces 14 are configured to extend from a pair of opposed short sides 11b of the bottom surface 11 and to have relatively smaller area sizes.

As shown in FIG. 1 to FIG. 3, the case 10 includes a case body 10A, a first sealing plate 10B, and a second sealing plate 10C. The case body 10A is, for example, formed in a square tube shape, and includes the bottom surface 11, the upper surface 12, and the pair of opposed first side surfaces 13. In this embodiment, regarding the case body 10A, a portion surrounded by the bottom surface 11, the upper surface 12, and the pair of opposed first side surfaces 13 is formed to be an opening. As shown in FIG. 3, the electricity storage device 1 includes two openings 15.

The case body 10A can be manufactured, for example, by folding and bending one metal plate so as to mold it in a cylindrical shape, and then by joining (for example, welding and joining) a seam. Thus, as shown in FIG. 1, the case body 10A includes a joint part 16 that is configured to extend along the first direction X on the upper surface 12. It is good for the case body 10A, which is not particularly restricting, for example, to be a metal, such as aluminum, aluminum alloy, iron, and iron alloy.

As shown in FIG. 2, the case body 10A includes a safe valve 17 on the bottom surface 11. The safe valve 17 is, for example, a thin-walled part that is set to be broken when an internal pressure of the case 10 reaches a predetermined value so as to release the internal pressure. Incidentally, the safe valve 17 might not always be provided on the bottom surface 11. In another embodiment, the safe valve 17 might be provided on the upper surface 12 or the first side surface 13.

The first sealing plate 10B is, for example, a member configured to seal one of the openings 15. The first sealing plate 10B is, for example, a plate-shaped member formed in an approximately rectangular shape. In this embodiment, the first sealing plate 10B is fit into one of the openings 15 and then joined by welding (for example, laser welding). As shown in FIG. 1 and FIG. 3, the positive electrode terminal 22 is attached to the first sealing plate 10B.

In this embodiment, the first sealing plate 10B includes a liquid injection part 19. The liquid injection part 19 includes a liquid injection hole 19A and a sealing plug 19B. The liquid injection hole 19A herein is a portion through which the electrolytic solution is injected into the case 10 at a manufacturing process of the electricity storage device 1. In this embodiment, the liquid injection hole 19A is provided at a position closer to the upper surface 12 on the first sealing plate 10B. The sealing plug 19B herein is a member configured to cover the liquid injection hole 19A.

The second sealing plate 10C is, for example, a member configured to seal the other one of the openings 15. The second sealing plate 10C is, for example, a plate-shaped member formed in an approximately rectangular shape. In this embodiment, the second sealing plate 10C is fit into the other one of the openings 15 and then joined by welding (for example, laser welding). As shown in FIG. 2 and FIG. 3, the negative electrode terminal 24 is attached to the second sealing plate 10C.

In the embodiments shown by FIG. 1 to FIG. 3, the first sealing plate 10B and the second sealing plate 10C configure the pair of opposed second side surfaces 14. It is preferable that both of the first sealing plate 10B and the second sealing plate 10C are, for example, configured with a metal material being the same as the metal material configuring the case body 10A.

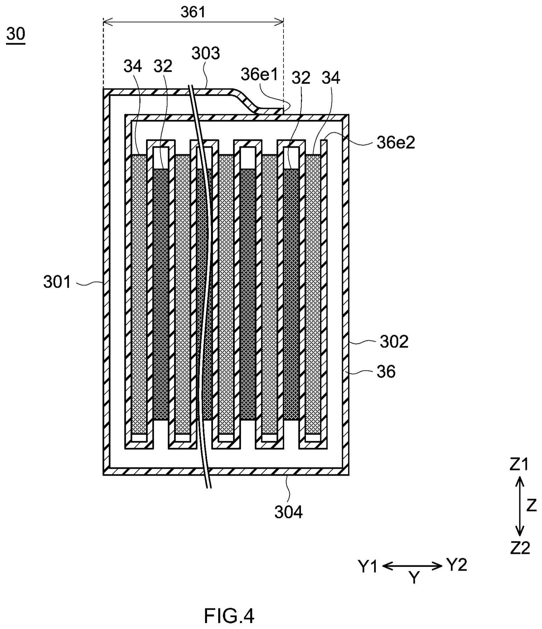

The positive electrode terminal 22 is, for example, electrically connected to the positive electrode 32 of the electrode assembly 30 (see FIG. 4). As shown in FIG. 1 and FIG. 3, the positive electrode terminal 22 is attached to the first sealing plate 10B. As shown in FIG. 3, the positive electrode terminal 22 is electrically connected through the positive electrode current collector part 23 to a positive electrode tab 33 of the electrode assembly 30. The positive electrode terminal 22 is, for example, made of metal, or is preferably made of aluminum or aluminum alloy. Incidentally, the positive electrode terminal 22 might configure the positive electrode current collector part 23.

The negative electrode terminal 24 is, for example, electrically connected to the negative electrode 34 of the electrode assembly 30 (see FIG. 4). As shown in FIG. 2 and FIG. 3, the negative electrode terminal 24 is attached to the second sealing plate 10C. As shown in FIG. 3, the negative electrode terminal 24 is electrically connected through the negative electrode current collector part 25 to a negative electrode tab 35 of the electrode assembly 30. The negative electrode terminal 24 is, for example, made of metal, or is preferably made of copper or copper alloy. Incidentally, the negative electrode terminal 24 might configure the negative electrode current collector part 25.

The electrode assembly 30 is, for example, a power generating element of the electricity storage device 1. As shown in FIG. 3, the electrode assembly 30 is accommodated at an inside of the case 10. FIG. 4 is a schematic cross section view of the electrode assembly 30. FIG. 4 schematically shows a cross section structure of the electrode assembly 30 which is viewed from the first sealing plate 10B (see FIG. 3) side. The electrode assembly 30 is, for example, formed in a flat shape.

As shown in FIG. 4, the electrode assembly 30 includes the positive electrode 32, the negative electrode 34, and the separator 36 that is disposed between the positive electrode 32 and the negative electrode 34. In this embodiment, the electrode assembly 30 is a flat-shaped electrode assembly in which the long separator 36 formed in a strip-like shape is alternately folded and bent at every predetermined interval so as to be formed in a zigzag shape and which includes a zigzag-shaped structure that positive electrodes 32 and negative electrodes 34 are alternately interposed by the zigzag-shaped separator 36.

As shown in FIG. 3 and FIG. 4, an outer surface of the electrode assembly 30 includes a first surface 301, a second surface 302, a third surface 303, and a fourth surface 304. The first surface 301 is positioned at one of end parts in a laminate direction of the positive electrode 32 and the negative electrode 34, and is positioned at an Y1 side in the second direction Y of FIG. 4. The second surface 302 is positioned at the other one of the end parts in the laminate direction of the positive electrode 32 and the negative electrode 34, and is positioned at an Y2 side in the second direction Y of FIG. 4. The third surface 303 is positioned between the first surface 301 and the second surface 302, and is positioned at a Z1 side in the third direction Z of FIG. 4. As shown in FIG. 3, the third surface 303 is configured to be opposed to the upper surface 12. The fourth surface 304 is positioned between the first surface 301 and the second surface 302, and is positioned at a Z2 side in the third direction Z of FIG. 4. As shown in FIG. 3, the fourth surface 304 is configured to be opposed to the bottom surface 11.

In the embodiment shown by FIG. 4, the separator 36 is wound on an outermost periphery of the zigzag-shaped structure, and configures an outer peripheral surface (an outer surface) of the electrode assembly 30. In this embodiment, the separator 36 is wound on the electrode arranged at the outermost side in the electrode assembly 30 (in this embodiment, the negative electrode 34 (see FIG. 4)), more than once. As shown in FIG. 4, the first surface 301, the second surface 302, the third surface 303, and the fourth surface 304 are configured by the separator 36. In this embodiment, a first end part 36e1 in a longitudinal direction of the separator 36 is arranged on the third surface 303. The separator 36 includes a first area 361 that contains the first end part 36e1 and is additionally arranged on the third surface 303. The first area 361 herein contains the first end part 36e1 of the separator 36 and a portion being adjacent to the first end part 36e1 and being arranged on the third surface 303. In this embodiment, on the first end part 36e1, no tape is put. However, the herein disclosed technique is not restricted into this, and the tape might be put on the first end part 36e1 in another embodiment. Incidentally, a second end part 36e2 in the longitudinal direction of the separator 36 is arranged at an inside of the electrode assembly 30.

As shown in FIG. 3, the electrode assembly 30 includes a first end surface 30A at one end in a shorter direction of the separator 36 and includes a second end surface 30B at the other end. In this embodiment, the first end surface 30A and the second end surface 30B are laminate surfaces of the electrode and the separator 36, and are open surfaces configured to be open toward an outer side of the electrode assembly 30. As shown in FIG. 3, the first end surface 30A is opposed to the first sealing plate 10B. The second end surface 30B is opposed to the second sealing plate 10C.

In the embodiment shown by FIG. 3, the electrode assembly 30 is provided on the first end surface 30A with the positive electrode tab 33 that is connected to the positive electrode 32. The electrode assembly 30 is provided on the second end surface 30B with the negative electrode tab 35 that is connected to the negative electrode 34. The positive electrode tab 33 herein is provided on each of the positive electrodes 32 contained in the electrode assembly 30. The positive electrode tab 33 (positive electrode tabs 33) provided on each of the positive electrodes 32 is, for example, superimposed so as to configure a positive electrode tab group. The negative electrode tab 35 herein is provided on each of the negative electrodes 34 contained in the electrode assembly 30. The negative electrode tab 35 (negative electrode tabs 35) provided on each of the negative electrodes 34 is, for example, superimposed so as to configure a negative electrode tab group.

It is good that the positive electrode 32 is, for example, a positive electrode sheet that is formed in a rectangular sheet shape. In this embodiment, the positive electrode 32 includes a positive electrode current collector foil that is formed in a rectangular sheet shape, and includes a positive electrode active material layer that is provided on a surface of the positive electrode current collector foil. It is preferable that the positive electrode current collector foil is, for example, made of aluminum or aluminum alloy. In the embodiment shown by FIG. 3, the positive electrode tab 33 is provided on an end part of the positive electrode current collector foil (an end part at X1 side in the drawing). The positive electrode tab 33 includes, for example, an exposed area on which the positive electrode current collector foil is exposed. The exposed part of the positive electrode tab 33 is, for example, joined to the positive electrode current collector part 23. The positive electrode active material layer includes, for example, a positive electrode active material. The positive electrode active material is, for example, a material that can reversibly store and release an electric charge carrier. As the positive electrode active material, for example, it is possible without particular restriction to use a material that is used as the positive electrode active material for this kind of electricity storage device. The positive electrode active material layer might contain a component other than the positive electrode active material (for example, a binder, an electrically conducting material, or the like).

It is good that the negative electrode 34 is, for example, a negative electrode sheet formed in a rectangular sheet shape. In this embodiment, the negative electrode 34 includes a negative electrode current collector foil that is formed in a rectangular sheet shape, and includes a negative electrode active material layer that is provided on a surface of the negative electrode current collector foil. The negative electrode current collector foil is preferably, for example, made of copper or copper alloy. In the embodiment shown by FIG. 3, the negative electrode tab 35 is provided on an end part of the negative electrode current collector foil (an end part at an X2 side in the drawing). The negative electrode tab 35 includes, for example, an exposed area on which the negative electrode current collector foil is exposed. The exposed part of the negative electrode tab 35 is, for example, joined to the negative electrode current collector part 25. The negative electrode active material layer contains, for example, a negative electrode active material. The negative electrode active material is, for example, a material that can reversibly store and release the electric charge carrier. As the negative electrode active material, for example, it is possible without particular restriction to use a material that is used as the negative electrode active material for this kind of electricity storage device. The negative electrode active material layer might contain a component other than the negative electrode active material (for example, the binder, a thickening agent, a dispersing agent, or the like).

As the separator 36, for example, it is possible without particular restriction to use the separator used for this kind of electricity storage device. The separator 36 might have a single layer structure, or have a two or more layers structure, for example, three layers structure, while the layers respectively have different properties and characteristics (thicknesses, porosities, or the like). The separator 36 is, for example, made of resin, or is preferably made of polyolefin resin. It is good that the polyolefin resin is polyethylene, polypropylene, or mixture of them.

As the electrolytic solution, for example, it is possible without particular restriction to use an electrolytic solution used for this kind of electricity storage device. The electrolytic solution is, for example, a nonaqueous electrolytic solution that contains a nonaqueous solvent (an organic solvent) and a supporting salt. As the nonaqueous solvent, for example, it is possible to use carbonates, such as ethylene carbonate, dimethyl carbonate, and ethyl methyl carbonate. As the supporting salt, for example, it is possible to use a fluorine-containing lithium salt, such as lithium hexafluorophosphate (LiPF₆).

The spacer 40 is, for example, a member arranged between the case 10 and the electrode assembly 30. In the embodiment shown by FIG. 3, the spacer 40 is arranged between the case 10 and the first end surface 30A of the electrode assembly 30. As shown in FIG. 3, the spacer 40 is arranged between the first sealing plate 10B and the electrode assembly 30 (the first end surface 30A at the X1 side) and further arranged between the second sealing plate 10C and the electrode assembly 30 (the first end surface 30A at the X2 side). Incidentally, it is good that the spacer 40 is, for example, configured with an insulating property resin (for example, a polyamide resin, or the like) that is conventionally used for this kind of electricity storage device.

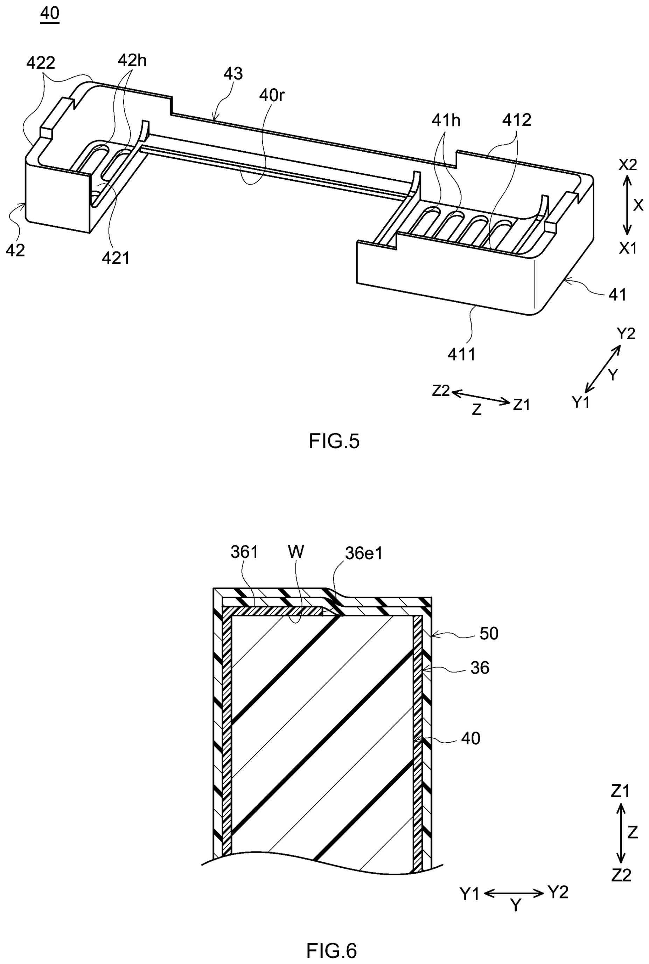

FIG. 5 is a perspective view of the spacer 40. FIG. 5 shows the spacer 40 that is expected to be arranged at the second sealing plate 10C side. As shown in FIG. 5, the spacer 40 includes a first spacer 41, a second spacer 42, and a coupling part 43. The first spacer 41 is, for example, a portion arranged at the upper surface 12 (see FIG. 3) side of the case 10. As shown in FIG. 5, the first spacer 41 includes a first opposed part 411 and a first wall part 412. The first opposed part 411 is, for example, a portion being opposed to the electrode assembly 30 (for example, the first end surface 30A of the electrode assembly 30). The first opposed part 411 herein is formed in an approximately rectangular flat plate shape. In the embodiment shown by FIG. 5, the first opposed part 411 includes a penetration hole 41h that is for making the electrolytic solution easily flow into the electrode assembly 30. The first wall part 412 is, for example, a portion that is configured to support the first opposed part 411 with respect to the second sealing plate 10C. The first wall part 412 herein is configured to extend from a peripheral edge of the first opposed part 411 toward the second sealing plate 10C. In this embodiment, a tip end of the first wall part 412 is configured to come into contact with the second sealing plate 10C.

The second spacer 42 is, for example, a portion arranged at the bottom surface 11 (see FIG. 3) side of the case 10. As shown in FIG. 5, the second spacer 42 includes a second opposed part 421 and a second wall part 422. The second opposed part 421 is, for example, a portion that is configured to be opposed to the electrode assembly 30 (for example, the first end surface 30A of the electrode assembly 30). The second opposed part 421 herein is formed in an approximately rectangular flat plate shape. In the embodiment shown by FIG. 5, the second opposed part 421 includes a penetration hole 42h that is for making the electrolytic solution easily flow into the electrode assembly 30. The second wall part 422 is, for example, a portion that is configured to support the second opposed part 421 with respect to the second sealing plate 10C. The second wall part 422 herein is configured to extend from a peripheral edge of the second opposed part 421 toward the second sealing plate 10C. In this embodiment, a tip end of the second wall part 422 is configured to come into contact with the second sealing plate 10C.

The coupling part 43 is, for example, a portion that is configured to couple the first spacer 41 and the second spacer 42. The coupling part 43 is, for example, formed in a plate shape. As shown in FIG. 5, the coupling part 43 is configured to couple the first spacer 41 and the second spacer 42 at one of first side surfaces 13 side (in FIG. 5, a side of the first side surface 13 positioned at the Y2 side (see FIG. 1 and FIG. 3, too)) of the case 10. In this embodiment, the coupling part 43 is configured to couple the first wall part 412 and the second wall part 422 at one of first side surfaces 13 side (in FIG. 5, the side of the first side surface 13 positioned at the Y2 side (see FIG. 1 and FIG. 3, too)) of the case 10. The coupling part 43 is not provided at the other one of first side surfaces 13 side (in FIG. 5, a side of the first side surface 13 positioned at the Y1 side (see FIG. 1 and FIG. 3, too)). Incidentally, in another embodiment, the coupling part 43 might not be provided. In that situation, the first spacer 41 and the second spacer 42 are not integrated.

At said the other one of first side surfaces 13 side of the case 10, the first spacer 41 and the second spacer 42 are not coupled. In this embodiment, regarding the spacer 40, a concave part 40r is provided that is dented from said the other one of the first side surfaces 13 side of the case 10 toward said one of the first side surfaces 13 side. On the concave part 40r, herein, the negative electrode tab 35 (the negative electrode tab group) is arranged.

Incidentally, in a situation where the spacer 40 is arranged at the first sealing plate 10B side, the first wall part 412 and the second wall part 422 are configured to extend toward the first sealing plate 10B. At the concave part 40r, the positive electrode tab 33 (the positive electrode tab group) is arranged.

FIG. 6 is a cross section view of a joint part W. FIG. 6 schematically shows cross section structures of the spacer 40, the separator 36, and the resin film 50 on the joint part W which are viewed from the first sealing plate 10B side. As shown in FIG. 6, the first area 361 of the separator 36 is configured to cover a part of the spacer 40. Here, both end parts of the first area 361 in the shorter direction of the separator 36 are arranged on the spacer 40. In this embodiment, the first area 361 includes the joint part W at which it is joined to the spacer 40. At the joint part W, the first end part 36e1 of the separator 36 is joined to the spacer 40. Although not particularly restricting, it is good on the joint part W that the separator 36 and the spacer 40 are, for example, welded. It is good that a means for welding as described above is, for example, ultrasonic welding, heat welding, or the like.

From a perspective of implementing an effect of the herein disclosed technique, when a length of the separator 36 in the shorter direction is treated as 100%, the first area 361 is joined to the spacer 40 at portions being preferably 0.03% to 3%, being further preferably 0.05% to 2%, or being furthermore preferably 0.1% to 1% respectively to both ends in the same direction. From a similar perspective, when a thickness of the electrode assembly 30 is treated as 100%, the first area 361 is joined to the spacer 40 at portions being preferably 20% to 80%, or being further preferably 30% to 70% in the same direction. Incidentally, the wording "thickness of the electrode assembly 30" means the shortest distance between the first surface 301 and the second surface 302.

The resin film 50 is, for example, a member that is configured to establish insulation between the case 10 and the electrode assembly 30. As shown in FIG. 3 and FIG. 6, the resin film 50 is arranged to surround an outer periphery of the electrode assembly 30. In this embodiment, the resin film 50 is formed in a cylindrical shape, and is configured to accommodate the electrode assembly 30 at the inside. It is preferable that the resin film 50 is configured to accommodate a part of the spacer 40 at the inside. As a resin material configuring the resin film 50, for example, it is good to use a resin material configuring the resin film contained in this kind of electricity storage device. As the resin material described above, for example, it is good to use a polyamide resin, a polyolefin resin (polyethylene, polypropylene, or the like), or the like.

In this embodiment, the resin film 50 is configured to cover the electrode assembly 30 and a part of the spacer 40. As shown in FIG. 6, a part of the resin film 50 is joined to the spacer 40. At the joint part W, here, the resin film 50, the separator 36, and the spacer 40 are mutually joined.

The electricity storage device 1 can be used for various purposes, but among them, it is preferably used as a power source for a motor (a driving power supply) mounted on a vehicle, such as passenger car and truck. Although the type of the vehicle is not particularly restricted, it is possible as a suitable example to be a plug-in hybrid electric vehicle (PHEV), a hybrid electric vehicle (HEV), a battery electric vehicle (BEV), or the like.

As described above, the electricity storage device 1 includes the electrode assembly 30 in which the positive electrodes 32 and the negative electrodes 34 are alternately laminated while the separator 36 is disposed between them, includes the case 10 configured to accommodate the electrode assembly 30, and the spacer 40 arranged between the case 10 and the electrode assembly 30. The outer surface of the electrode assembly 30 includes the first surface 301 positioned at one of the end parts in the laminate direction of the positive electrode 32 and the negative electrode 34, includes the second surface 302 positioned at the other one of the end parts in the laminate direction, and the third surface 303 positioned between the first surface 301 and the second surface 302. The first surface 301, the second surface 302, and the third surface 303 are configured by the separator 36. The first end part 36e1 of the separator 36 in the longitudinal direction is arranged on the third surface 303. The separator 36 includes the first area 361 that contains the first end part 36e1 and further that is arranged on the third surface 303. The first area 361 is configured to cover the part of the spacer 40, and includes the joint part W at which it is joined to the spacer 40.

The electricity storage device 1 includes the spacer 40 that is arranged between the case 10 and the electrode assembly 30. By this, it is possible to suppress the electrode assembly 30 from moving in the case 10. The first surface 301, the second surface 302, and the third surface 303, which are contained in the outer surface of the electrode assembly 30, are configured by the separator 36. On the third surface 303, the first end part 36e1 of the separator 36 in the longitudinal direction is arranged. The first end part 36e1 herein is a winding-end end part of the separator 36. In other words, the winding-end end part of the separator 36 is arranged on neither the first surface 301 nor the second surface 302 in the laminate direction of the positive electrode 32 and the negative electrode 34. By this, it is required to put the tape neither on the first surface 301 nor on the second surface 302. Thus, it is possible to suppress a step from being caused on the first surface 301 and the second surface 302. Further, of the separator 36, the first area 361 containing the first end part 36e1 and being arranged on the third surface 303 is configured to cover the part of the spacer 40 and is joined to the spacer 40. By this, it is not required to put the tape for fixing the first end part 36e1 to the electrode assembly 30. Alternatively, it is possible to reduce an amount of the tape. Therefore, in the electricity storage device 1, it is possible to suppress the surface pressure on each surface of the electrode assembly 30 from becoming non-uniform.

The electrode assembly 30 might be an electrode assembly having a zigzag-shaped structure in which the long separator 36 formed in the strip-like shape is folded alternately at each predetermined interval so as to be formed in the zigzag shape, and in which the positive electrodes 32 and the negative electrodes 34 are alternately interposed by the zigzag-shaped separator 36 and then laminated. By making the electrode assembly 30 have the zigzag-shaped structure, it becomes easy to arrange the first end part 36e1 of the separator 36 stably on the third surface 303. Thus, it is possible to further properly implement the effect of the herein disclosed technique.

The first end part 36e1 of the separator 36 might be joined to the spacer 40. By this, in addition to the above described effect, it is possible to further suitably suppress the separator 36 from being peeled.

On the joint part W at which the separator 36 and the spacer 40 are joined, the separator 36 and the spacer 40 might be welded. By this, it is possible to further enhance a joint strength between the separator 36 and the spacer 40.

The separator 36 might be wound more than once on the electrode (here, the negative electrode 34) arranged at the outermost side in the electrode assembly 30. By this, in addition to the above described effects, it is possible to suppress the exposure of the electrode to the outside caused by the separator 36 being peeled.

The case 10 might contain the case body 10A that has the opening 15 and might contain the sealing plate (here, the first sealing plate 10B and the second sealing plate 10C) that is configured to seal the opening 15. The spacer 40 might be arranged between the sealing plate (here, the first sealing plate 10B and the second sealing plate 10C) and the electrode assembly 30. By this, it is possible to suppress the electrode assembly 30 from moving between the electrode assembly 30 and the sealing plate. Therefore, it is possible to further suitably reduce a risk of causing the short circuit between the electrode assembly 30 and the sealing plate.

The electrode assembly 30 might include the positive electrode tab 33 on the first end surface 30A in the shorter direction of the separator 36 while the positive electrode tab is electrically connected to the positive electrode 32, and might include the negative electrode tab 35 on the second end surface 30B in the shorter direction while the negative electrode tab is electrically connected to the negative electrode 34. Between the case 10 and the first end surface 30A or between the case and the second end surface 30B, the spacer 40 might be arranged. In that situation, neither the first end surface 30A nor the second end surface 30B of the electrode assembly 30 is covered by the separator 36. In other words, on the first end surface 30A and the second end surface 30B, the electrode is exposed to the outside of the electrode assembly 30. Therefore, by arranging the spacer 40 between the case 10 and the first end surface 30A or between the case and the second end surface 30B, it is possible to further properly reduce the risk of causing the short circuit between the electrode assembly 30 and the case 10.

The electricity storage device 1 might further include a resin film 50. The resin film 50 might be configured to cover the electrode assembly 30 and the part of the spacer 40. By this, it is possible to further properly reduce the risk of causing the short circuit between the electrode assembly 30 and the case 40.

At least a part of the resin film 50 might be joined to the spacer 40. By this, it is possible to furthermore enhance the above described effects. In that situation, for example, when the resin film 50 is wound on the electrode assembly 30 and on a part of the spacer 40, it is preferable to join the resin film 50 and the separator 36 to the spacer 40. By this, it is possible to omit a number of joining steps, and thus it is possible to enhance productivity for the electricity storage device 1.

Above, although the embodiments of the herein disclosed technique have been explained, the embodiments are merely illustrative, and are not construed as limiting the scope of the appended claims. The technique recited in patent claims contains matters, for example, in which below described specific examples are variously deformed or changed.

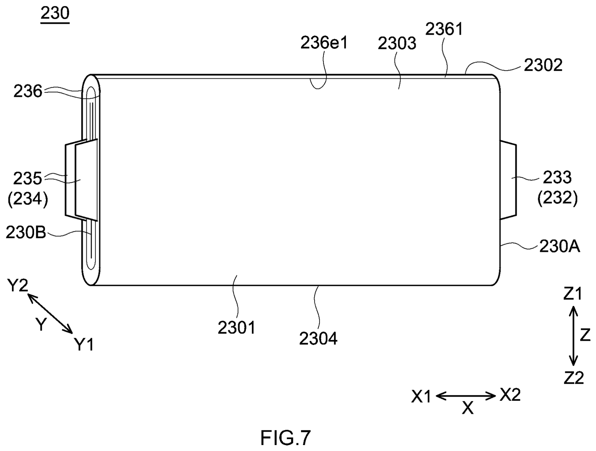

For example, in the embodiment described above, the electricity storage device 1 includes the electrode assembly 30 that has the zigzag-shaped structure. However, the herein disclosed technique is not restricted to this. FIG. 7 is a perspective view of an electrode assembly 230. The electricity storage device 1 might include the electrode assembly 230 shown by FIG. 7, instead of the electrode assembly 30. The electrode assembly 230 is, for example, a flat-shaped wound electrode assembly in which a long strip-shaped positive electrode 232 and a long strip-shaped negative electrode 234 are laminated, while a long strip-shaped separator 236 is disposed between them, and are wound therein along the longitudinal direction. The electrode assembly 230 is arranged in the case 10 to make a winding axis be in parallel with the bottom surface 11 and the upper surface 12 (see FIG. 3). As shown in FIG. 7, the electrode assembly 230 includes a positive electrode tab 233 on a first end surface 230A in the shorter direction of a separator 236 and includes a negative electrode tab 235 on a second end surface 230B in the same direction.

As shown in FIG. 7, the outer surface of the electrode assembly 230 includes a first surface 2301, a second surface 2302, a third surface 2303, and a fourth surface 2304. The first surface 2301 and the second surface 2302 are rectangular surfaces which are positioned respectively at end parts in the laminate direction (in this embodiment, a thickness direction of the electrode assembly 230) of the electrode on the electrode assembly 230. Each of the third surface 2303 and the fourth surface 2304 is positioned between the first surface 2301 and the second surface 2302, and is a bent surface that is bent to an outer side of the electrode assembly 230.

In the embodiment shown by FIG. 7, any of the first surface 2301, the second surface 2302, the third surface 2303, and the fourth surface 2304 are configured by the separator 236. In this embodiment, a first end part 236e1 of the separator 236 in the longitudinal direction is arranged on the third surface 2303. The separator 236 includes the first area 2361 that is configured to contain the first end part 236e1 and further that is arranged on the third surface 2303. The first area 2361 might cover a part of the spacer 40 and might include a joint part at which it is joined to the spacer 40 (see FIG. 3).

Regarding the electrode assembly 230 being the wound electrode assembly, for a manufacturing process, the first end part 236e1 of the separator 236 tends to be arranged on the third surface 2303. Therefore, the wound electrode assembly is preferable for implementing the effect of the herein disclosed technique.

The herein disclosed technique could contain techniques recited in below-described Items.

### Item 1:

An electricity storage device, comprising:
an electrode assembly in which a positive electrode and a negative electrode are alternately laminated via a separator;
a case that is configured to accommodate the electrode assembly; and
a spacer that is arranged between the case and the electrode assembly, wherein
an outer surface of the electrode assembly comprises:
   a first surface that is positioned at one of end parts in a laminate direction of the positive electrode and the negative electrode;
   a second surface that is positioned at the other one of the end parts in the laminate direction; and
   a third surface that is positioned between the first surface and the second surface,
the first surface, the second surface, and the third surface are configured by the separator,
a first end part in a longitudinal direction of the separator is arranged on the third surface,
the separator comprises a first area that is configured to contain the first end part and that is arranged on the third surface, and
the first area is configured to cover a part of the spacer, and comprises a joint part at which the first area is joined to the spacer.

### Item 2:

The electricity storage device recited in Item 1, wherein
the electrode assembly is an electrode assembly comprising a zigzag-shaped structure in which the separator formed in a long strip-like shape is folded alternately at each predetermined interval so as to be formed in a zigzag shape and in which the positive electrodes and the negative electrodes are alternately interposed by the separator formed in the zigzag shape and then are laminated.

### Item 3:

The electricity storage device recited in Item 1, wherein
the electrode assembly is an electrode assembly formed in a flat shape in which the positive electrode formed in a long strip-like shape and the negative electrode formed in a long strip-like shape are laminated, while the separator formed in a long strip-like shape is disposed between the positive electrode and the negative electrode, and then are wound therein along a longitudinal direction.

### Item 4:

The electricity storage device recited in any one of Items 1 to 3, wherein the first end part of the separator is joined to the spacer.

### Item 5:

The electricity storage device recited in any one of Items 1 to 4, wherein
at the joint part of the separator and the spacer, the separator and the spacer are welded.

### Item 6:

The electricity storage device recited in any one of Items 1 to 5, wherein
the separator is wound more than once on an electrode arranged at an outermost side in the electrode assembly.

### Item 7:

The electricity storage device recited in any one of Items 1 to 6, wherein
the case comprises a case body configured to comprise an opening and a sealing plate configured to seal the opening, and
the spacer is arranged between the sealing plate and the electrode assembly.

### Item 8:

The electricity storage device recited in any one of Items 1 to 7, wherein
the electrode assembly comprises a positive electrode tab on a first end surface in a shorter direction of the separator, the positive electrode tab being electrically connected to the positive electrode, and comprises a negative electrode tab on a second end surface in the shorter direction, the negative electrode tab being electrically connected to the negative electrode, and
the spacer is arranged between the case and the first end surface or between the case and the second end surface.

### Item 9:

The electricity storage device recited in any one of Items 1 to 8, further comprising:
a resin film, wherein
the resin film is configured to cover the electrode assembly and a part of the spacer.

### Item 10:

The electricity storage device recited in Item 9, wherein
at least a part of the resin film is joined to the spacer.

## Claims

1. An electricity storage device , comprising:
an electrode assembly in which a positive electrode and a negative electrode are alternately laminated via a separator ;
a case that is configured to accommodate the electrode assembly ; and
a spacer that is arranged between the case and the electrode assembly , wherein
an outer surface of the electrode assembly comprises:
a first surface that is positioned at one of end parts in a laminate direction of the positive electrode and the negative electrode ;
a second surface that is positioned at the other one of the end parts in the laminate direction; and
a third surface that is positioned between the first surface and the second surface ,
the first surface , the second surface , and the third surface are configured by the separator ,
a first end part in a longitudinal direction of the separator is arranged on the third surface ,
the separator comprises a first area that is configured to contain the first end part and that is arranged on the third surface
, and
the first area is configured to cover a part of the spacer , and comprises a joint part at which the first area is joined to the spacer

2. The electricity storage device according to claim 1, wherein the electrode assembly is an electrode assembly comprising a zigzag-shaped structure in which the separator formed in a long strip-like shape is folded alternately at each predetermined interval so as to be formed in a zigzag shape and in which the positive electrodes and the negative electrodes are alternately interposed by the separator formed in the zigzag shape and then are laminated.

3. The electricity storage device according to claim 1, wherein
the electrode assembly is an electrode assembly formed in a flat shape in which the positive electrode formed in a long strip-like shape and the negative electrode formed in a long strip-like shape are laminated, while the separator formed in a long strip-like shape is disposed between the positive electrode and the negative electrode , and then are wound therein along a longitudinal direction.

4. The electricity storage device according to any one of claims 1 to 3, wherein
the first end part of the separator is joined to the spacer.

5. The electricity storage device according to any one of claims 1 to 3, wherein
at the joint part of the separator and the spacer , the separator and the spacer are welded.

6. The electricity storage device according to any one of claims 1 to 3, wherein
the separator is wound more than once on an electrode arranged at an outermost side in the electrode assembly.

7. The electricity storage device according to any one of claims 1 to 3, wherein
the case comprises a case body configured to comprise an opening and a sealing plate configured to seal the opening , and
the spacer is arranged between the sealing plate and the electrode assembly.

8. The electricity storage device according to any one of claims 1 to 3, wherein
the electrode assembly comprises a positive electrode tab on a first end surface in a shorter direction of the separator , the positive electrode tab being electrically connected to the positive electrode , and comprises a negative electrode tab on a second end surface in the shorter direction, the negative electrode tab being electrically connected to the negative electrode , and
the spacer is arranged between the case and the first end surface or between the case and the second end surface.

9. The electricity storage device according to any one of claims 1 to 3, further comprising:
a resin film , wherein
the resin film is configured to cover the electrode assembly and a part of the spacer.

10. The electricity storage device according to claim 9, wherein at least a part of the resin film is joined to the spacer.
